(19) Europäisches Patentamt
European Patent Office
Office européen des brevets

(11) **EP 3 161 066 B1**

(12) **EUROPEAN PATENT SPECIFICATION**

(45) Date of publication and mention
of the grant of the patent:
**18.11.2020  Bulletin 2020/47**

(21) Application number: **15728901.8**

(22) Date of filing: **17.06.2015**

(51) Int Cl.:
***C08L 23/06*** *(2006.01)*

(86) International application number:
**PCT/EP2015/063624**

(87) International publication number:
**WO 2015/197453 (30.12.2015 Gazette 2015/52)**

(54) **POLYETHYLENE COMPOSITION FOR INJECTION MOULDING**

POLYETHYLENZUSAMMENSETZUNG ZUM SPRITZGIESSEN

COMPOSITION DE POLYÉTHYLÈNE POUR MOULAGE PAR INJECTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.06.2014  US 201462016508 P**

(43) Date of publication of application:
**03.05.2017  Bulletin 2017/18**

(73) Proprietor: **Basell Polyolefine GmbH**
**50389 Wesseling (DE)**

(72) Inventors:
• **MEIER, Gerhardus**
**Houston, TX 77009 (US)**
• **SCHÜLLER, Ulf**
**64331 Weiterstadt (DE)**

• **MAVRIDIS, Harilaos**
**Lebanon, Ohio 45036 (US)**
• **MARCZINKE, Bernd Lothar**
**65929 Frankfurt (DE)**
• **DÖTSCH, Diana**
**55545 Bad Kreuznach (DE)**
• **WIESECKE, Jens**
**64673 Zwingenberg (DE)**

(74) Representative: **LyondellBasell**
**c/o Basell Poliolefine Italia**
**Intellectual Property**
**P.le Donegani 12**
**44122 Ferrara (IT)**

(56) References cited:
**US-A1- 2005 288 443**

**Description**

FIELD OF THE INVENTION

The present disclosure relates to a novel polyethylene compositions. More specifically, the present disclosure relates to polyethylene compositions that may be used for injection moulding, with easy processing behavior.

BACKGROUND OF THE INVENTION

Injection moulding is a moulding technique suitable for moulding small to large objects. A mould is generated in dedicated injection moulding machines comprising a rotating screw in a barrel. The mould is injected continuously or with a mould buffer by means of pressure.

If the injectable object is large and complicated in shape, the pressure has to be very high in order to completely fill the cavity. Often several hot runners are used to overcome the high pressure level and to generate an even temperature profile whilst injecting polyethylene, in order to minimise the warpage of the injected objects.

Polyethylene compositions designed for producing articles by injection moulding are disclosed in US20050288443. Such compositions, obtained by combining two polyethylene components, have relatively high values of high-molecular-weight-end polydispersity.

There is a need to devise a new and improved injection moulding polyethylene material that has the desired balance of properties. The properties that should be balanced include stress cracking resistance (FNCT) and impact resistance (Charpy). These properties should be balanced to prevent high warpage of the injection moulded article, and should be suitable to make it possible to lower the injection moulding pressure generally required in the production of large, hollow objects, preferably allowing melt-processing at surprisingly high values of shear rate, still without undergoing pressure oscillations and flow-instabilities..

SUMMARY OF THE INVENTION

Thus the present invention provides a polyethylene composition having the following features:

1) density from 0.950 to 0.970 g/cm$^3$, determined according to ISO 1183 at 23°C;
2) MIE from 1 to 30 g/10 min.;
3) ratio MIF/MIE from 15 to 30, in particular from 20 to 29 or from 22 to 29, where MIF is the melt flow index at 190°C with a load of 21.60 kg, and MIE is the melt flow index at 190°C with a load of 2.16 kg, both determined according to ISO 1133;
4) ER values from 0.40 to 0.52.

BRIEF DESCRIPTION OF THE DRAWINGS

These and other features, aspects, and advantages of the present disclosure will become better understood with reference to the following description and appended claims, and accompanying drawing figures where:

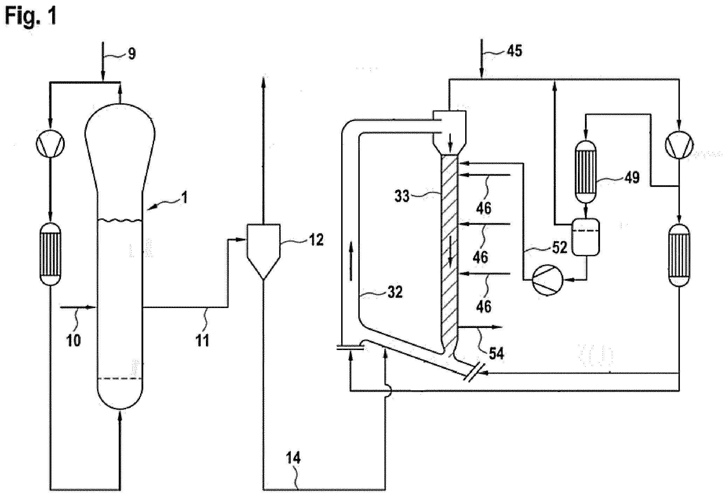

Figure 1 is an illustrative embodiment of a simplified process-flow diagram of two serially connected gas-phase reactors suitable for use in accordance with various embodiments of ethylene polymerization processes disclosed herein to produce various embodiments of the polyethylene compositions disclosed herein.

It should be understood that the various embodiments are not limited to the arrangements and instrumentality shown in the drawing figures.

DETAILED DESCRIPTION OF THE INVENTION

The expression "polyethylene composition" is intended to embrace, as alternatives, both a single ethylene polymer and an ethylene polymer composition, in particular a composition of two or more ethylene polymer components, preferably with different molecular weights, such composition being also called "bimodal" or "multimodal" polymer in the relevant art.

The polyethylene composition of the present invention can consist of or comprise one or more ethylene homopolymers, in particular two ethylene homopolymers. It can also consist of or comprise one or more ethylene copolymers, in particular an ethylene homopolymer and an ethylene copolymer or two ethylene copolymers.

In a particular embodiment, in the polyethylene composition of the present invention the above defined fractions A) and B) are both ethylene homopolymers.

In an alternative embodiment, the said fraction A) is an ethylene homopolymer or copolymer and the said fraction B) is an ethylene copolymer.

The comonomer or comonomers present in the ethylene copolymers are generally selected from olefins having formula $CH_2=CHR$ wherein R is an alkyl radical, linear or branched, having from 1 to 10 carbon atoms.

Specific examples are propylene, butene-1, pentene-1, 4-methylpentene-1, hexene-1, octene-1 and decene-1. A particularly preferred comonomer is hexene-1.

All the features herein defined are referred to the said ethylene polymer or ethylene polymer composition. The addition of other components, like the additives normally employed in the art, can modify one or more of said features.

Specific and preferred ranges of density for the polyethylene composition of the present invention are:

- from 0.952 to 0.970 $g/cm^3$;
- from 0.955 to 0.970 $g/cm^3$;
- from 0.960 to 0.970 $g/cm^3$.

Specific and preferred ranges of MIE for the polyethylene composition of the present invention are:

- from 1 to 25 g/10 min., or from 1 to 20 g/10 min.;
- from 2 to 25 g/10 min., or from 2 to 20 g/10 min.;
- from 3 to 25 g/10 min., or from 3 to 20 g/10 min.;
- from 5 to 25 g/10 min., or from 5 to 20 g/10 min.;
- from 6 to 25 g/10 min., or from 6 to 20 g/10 min.

The ratio MIF/MIE provides a rheological measure of molecular weight distribution.

Additional information on the molecular weight distribution is provided by the rheological polydispersity ER, which is determined from plots of storage modulus (G') versus loss modulus (G") and is a measure of high-molecular-weight-end polydispersity.

The polyethylene composition of the present invention preferably has ER values from 0.42 to 0.52.

It has been found that the polyethylene composition of the present invention can be prepared by a gas phase polymerization process in the presence of a Ziegler-Natta catalyst.

A Ziegler-Natta catalyst comprises the product of the reaction of an organometallic compound of group 1, 2 or 13 of the Periodic Table of elements with a transition metal compound of groups 4 to 10 of the Periodic Table of Elements (new notation). In particular, the transition metal compound can be selected among compounds of Ti, V, Zr, Cr and Hf and is preferably supported on $MgCl_2$.

Particularly preferred catalysts comprise the product of the reaction of said organometallic compound of group 1, 2 or 13 of the Periodic Table of elements, with a solid catalyst component comprising a Ti compound and an electron donor compound (ED) supported on $MgCl_2$.

Preferred organometallic compounds are the organo-Al compounds.

Thus in a preferred embodiment, the polyethylene composition of the present invention is obtainable by using a Ziegler-Natta polymerization catalyst, more preferably a Ziegler-Natta catalyst supported on $MgCl_2$, even more preferably a Ziegler-Natta catalyst comprising the product of reaction of:

a) a solid catalyst component comprising a Ti compound and an electron donor compound ED supported on $MgCl_2$;
b) an organo-Al compound; and optionally
c) an external electron donor compound $ED_{ext}$.

Preferably in component a) the ED/Ti molar ratio ranges from 1.5 to 3.5 and the Mg/Ti molar ratio is higher than 5.5, in particular from 6 to 80.

Among suitable titanium compounds are the tetrahalides or the compounds of formula $TiX_n(OR^1)_{4-n}$, where $0 \le n \le 3$, X is halogen, preferably chlorine, and $R^1$ is $C_1$-$C_{10}$ hydrocarbon group. The titanium tetrachloride is the preferred compound.

The ED compound is generally selected from alcohol, ketones, amines, amides, nitriles, alkoxysilanes, aliphatic ethers, and esters of aliphatic carboxylic acids.

Preferably the ED compound is selected among, amides, esters and alkoxysilanes.

Excellent results have been obtained with the use of esters which are thus particularly preferred as ED compound. Specific examples of esters are the alkyl esters of $C_1$-$C_{20}$ aliphatic carboxylic acids and in particular $C_1$-$C_8$ alkyl esters of aliphatic mono carboxylic acids such as ethylacetate, methyl formiate, ethylformiate, methylacetate, propylacetate, i-propylacetate, n-butylacetate, i-butylacetate. Moreover, are also preferred the aliphatic ethers and particularly the $C_2$-$C_{20}$ aliphatic ethers, such as tetrahydrofurane (THF) or dioxane.

In the said solid catalyst component the $MgCl_2$ is the basic support, even if minor amount of additional carriers can be used. The MgCl$_2$ can be used as such or obtained from Mg compounds used as precursors that can be transformed into MgCl$_2$ by the reaction with halogenating compounds. Particularly preferred is the use of MgCl$_2$ in active form which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the ASTM-card reference of the spectrum of the non-active halide is diminished in intensity and broadened. In the X-ray spectra of preferred magnesium dihalides in active form said most intense line is diminished in intensity and replaced by a halo whose maximum intensity is displaced towards lower angles relative to that of the most intense line.

As previously mentioned, the said solid catalyst component is converted into catalysts for the polymerization of olefins by reacting it, according to known methods, with an organometallic compound of group 1, 2 or 13 of the Periodic Table of elements, in particular with an Alalkyl compound.

The alkyl-Al compound is preferably chosen among the trialkyl aluminum compounds such as for example triethylaluminum, triisobutylaluminum, tri-n- butylaluminum, tri-n-hexylaluminum, tri-n-octylaluminum. It is also possible to use alkylaluminum halides, alkylaluminum hydrides or alkylaluminum sesquichlorides such as AlEt$_2$Cl and Al$_2$Et$_3$Cl$_3$ optionally in mixture with said trialkyl aluminum compounds.

The external electron donor compound ED$_{ext}$ optionally used to prepare the said Ziegler-Natta catalysts can be equal to or different from the ED used in the solid catalyst component a).

Preferably it is selected from the group consisting of ethers, esters, amines, ketones, nitriles, silanes and their mixtures. In particular it can advantageously be selected from the C$_2$-C$_{20}$ aliphatic ethers and in particulars cyclic ethers preferably having 3-5 carbon atoms such as tetrahydrofurane and dioxane.

Specific examples of the above described Ziegler-Natta catalysts and of methods for their preparation are provided in WO2004106388.

In particular, the polyethylene composition of the present invention is obtainable by a process wherein all the polymerization steps are carried out in the presence of the said catalyst.

In detail, by using the above described polymerization catalyst, the polyethylene composition of the present invention can be prepared in a process comprising the following steps, in any mutual order:

a) polymerizing ethylene, optionally together with one or more comonomers, in a gas-phase reactor in the presence of hydrogen;
b) polymerizing ethylene, optionally together with one or more comonomers, in another gas-phase reactor in the presence of an amount of hydrogen less than step a);

where in at least one of said gas-phase reactors the growing polymer particles flow upward through a first polymerization zone (riser) under fast fluidization or transport conditions, leave said riser and enter a second polymerization zone (downcomer) through which they flow downward under the action of gravity, leave said downcomer and are reintroduced into the riser, thus establishing a circulation of polymer between said two polymerization zones.

In the first polymerization zone (riser), fast fluidization conditions are established by feeding a gas mixture comprising one or more olefins (ethylene and comonomers) at a velocity higher than the transport velocity of the polymer particles. The velocity of said gas mixture is preferably comprised between 0.5 and 15 m/s, more preferably between 0.8 and 5 m/s.

The terms "transport velocity" and "fast fluidization conditions" are well known in the art; for a definition thereof, see, for example, "D. Geldart, Gas Fluidisation Technology, page 155 et seq. , J. Wiley & Sons Ltd. , 1986".

In the second polymerization zone (downcomer), the polymer particles flow under the action of gravity in a densified form, so that high values of density of the solid are reached (mass of polymer per volume of reactor), which approach the bulk density of the polymer.

In other words, the polymer flows vertically down through the downcomer in a plug flow (packed flow mode), so that only small quantities of gas are entrained between the polymer particles.

Such process allows to obtain from step a) an ethylene polymer with a molecular weight lower than the ethylene copolymer obtained from step b).

The operating temperature in the reactor of step a) is generally between 50 and 120°C, while the operating pressure is generally between 0.5 and 10 MPa.

The ethylene polymer coming from step a) and the entrained gas are then passed through a solid/gas separation step, in order to prevent the gaseous mixture coming from the first polymerization reactor from entering the reactor of step b) (second gas-phase polymerization reactor). Said gaseous mixture can be recycled back to the first polymerization reactor, while the separated ethylene polymer is fed to the reactor of step b). A suitable point of feeding of the polymer into the second reactor is on the connecting part between the downcomer and the riser, wherein the solid concentration is particularly low, so that the flow conditions are not negatively affected.

The operating temperature in step b) is generally in the range of 65 to 95°C, and the pressure is generally in the range of 1.5 to 4.0 MPa.

The second gas-phase reactor is aimed to produce a relatively high molecular weight ethylene polymer. Furthermore, in order to tailor the molecular weight distribution of the final ethylene polymer, the reactor of step b) can be conveniently operated by establishing different conditions of monomers and hydrogen concentration within the riser and the downcomer.

The polymer particles coming from the downcomer are reintroduced in the riser of step b).

More details on the above described polymerization process are provided in WO9412568.

The following examples are given to illustrate, without limiting, the present invention.

EXAMPLES

Unless differently stated, the following test methods are used to determine the properties reported in the detailed description and in the examples.

- **Density**

Determined according to ISO 1183at 23°C.

- **Melt flow index**

Determined according to ISO 1133 at 190°C with the specified load.

- **Environmental stress cracking resistance according to full notch creep test (FNCT)**

The environmental stress cracking resistance of polymer samples is determined in accordance to international standard ISO 16770 (FNCT) in aqueous surfactant solution. From the polymer sample a compression moulded 10 mm thick sheet has been prepared. The bars with squared cross section (10x10x100 mm) are notched using a razor blade on four sides perpendicularly to the stress direction. A notching device described in M. Fleissner in Kunststoffe 77 (1987), pp. 45 is used for the sharp notch with a depth of 1.6 mm. The load applied is calculated from tensile force divided by the initial ligament area. Ligament area is the remaining area = total cross-section area of specimen minus the notch area. For FNCT specimen: $10 \times 10$ mm$^2$ - 4 times of trapezoid notch area = 46.24 mm$^2$ (the remaining cross-section for the failure process / crack propagation). The test specimen is loaded with standard condition suggested by the ISO 16770 with constant load of 6 MPa at 50°C in an aqueous solution of 2% by weight of ARKOPAL N100 and 5% of anionic surfactant GENAPOL Paste. Time until rupture of test specimen is detected.

- **Charpy aCN**

Fracture toughness determination by an internal method on test bars measuring 10 x 10 x 80 mm which had been sawn out of a compression molded sheet with a thickness of 10 mm. Six of these test bars are notched in the center using a razor blade in the notching device mentioned above for FNCT. The notch depth is 1.6 mm. The measurement is carried out substantially in accordance with the Charpy measurement method in accordance with ISO 179-1, with modified test specimens and modified impact geometry (distance between supports). All test specimens are conditioned to the measurement temperature of -30°C over a period of from 2 to 3 hours. A test specimen is then placed without delay onto the support of a pendulum impact tester in accordance with ISO 179-1. The distance between the supports is 60 mm. The drop of the 2 J hammer is triggered, with the drop angle being set to 160°, the pendulum length to 225 mm and the impact velocity to 2.93 m/s. The fracture toughness value is expressed in kJ/m$^2$ and is given by the quotient of the impact energy consumed and the initial cross-sectional area at the notch, aCN. Only values for complete fracture and hinge fracture can be used here as the basis for a common meaning (see suggestion by ISO 179-1).

- **Rheological Measurements and Calculations**

Rheological measurements are performed in accordance with ASTM 4440-95a, which measures dynamic rheology data in the frequency sweep mode. A Rheometrics ARES rheometer is used. It is operated in the parallel plate mode (plate diameter 50 mm) in a nitrogen environment to minimize sample oxidation/degradation with a gap in the parallel plate geometry of 1.2-1.4 mm and strain amplitude of 10%. Frequencies range from 0.0251 to 398.1 rad/sec.

ER is determined by the method of R. Shroff and H. Mavridis, "New Measures of Polydispersity from Rheological Data on Polymer Melts," J. Applied Polymer Science 57 (1995) 1605 (see also U.S. Pat. No. 5,534,472 at Column 10, lines 20-30). Storage modulus (G') and loss modulus of (G") are measured. The nine lowest frequency points are used (five points per frequency decade) and a linear equation is fitted by least-squares regression to log G' versus log G". ER is then calculated from:

$$ER = (1.781*10^{-3})*G'$$

at a value of G"=5,000 dyn/cm$^2$.

As those skilled in the art will recognize, when the lowest G" value is greater than 5,000 dyn/cm$^2$, the determination of ER involves extrapolation. The ER values calculated then will depend on the degree on nonlinearity in the log G' versus log G" plot. The temperature, plate diameter and frequency range are selected such that, within the resolution of the rheometer, the lowest G" value is close to or less than 5,000 dyne/cm$^2$.

Examples 1- 2 and Comparative Examples 1-3

- Process Setup

In Examples 1 and 2 the process of the invention was carried out under continuous conditions in a plant comprising two serially connected gas-phase reactors, as shown in Figure 1.

Example 1

- The solid catalyst component was prepared as described in Example 13 of WO2004106388. The AcOEt/Ti molar ratio was of 8.
- Polymerization
  9 g/h of the solid catalyst component prepared as described above were fed, using 5 kg/h of liquid propane, to a precontacting apparatus, in which also triethylaluminum (TEAL) as well as tetrahydrofuran (THF) were dosed. The weight ratio between aluminum alkyl and solid catalyst component was 6:1. The weight ratio between aluminum alkyl and THF was 20. The precontacting step was carried out under stirring at 50°C with a total residence time of 120 minutes.

The catalyst enters the first gas-phase polymerization reactor 1 of Fig. 1 via line 10. In the first reactor ethylene was polymerized using H$_2$ as molecular weight regulator and in the presence of propane as inert diluent. 60 kg/h of ethylene and 65 g/h of hydrogen were fed to the first reactor via line 9. No comonomer was fed to the first reactor.

The polymerization was carried out at a temperature of 80 °C and at a pressure of 2.9 MPa.

The polymer obtained in the first reactor was discontinuously discharged via line 11, separated from the gas into the gas/solid separator 12, and reintroduced into the second gas-phase reactor via line 14.

The polymer produced in the first reactor had a melt index MIE of about 8 g/10 min and a density of 0.966 kg/dm$^3$.

The second reactor was operated under polymerization conditions of about 80 °C, and a pressure of 2.5 MPa. 8 kg/h of ethylene were introduced in the downcomer 33 of the second reactor via line 46. 5 kg/h of propane, 17.5 kg/h of ethylene and 30 g/h of hydrogen were fed through line 45 into the recycling system.

In order to keep the molecular weight distribution narrow, the second reactor was operated by establishing similar conditions of monomers and hydrogen concentration within the riser 32 and the downcomer 33. This is achieved by feeding via line 52, 75 kg/h of a liquid stream (liquid barrier) into the upper part of the downcomer 33. Said liquid stream has a composition different from that of the gas mixture present in the riser. Said different concentrations of monomers and hydrogen within the riser, the downcomer of the second reactor and the composition of the liquid barrier are indicated in Table 1. The liquid stream of line 52 comes from the condensation step in the condenser 49, at working conditions of 50°C and 2.5 MPa, wherein a part of the recycle stream is cooled and partially condensed.

As shown in the figure, a separating vessel and a pump are placed, in the order, downstream the condenser 49. The final polymer was discontinuously discharged via line 54.

In Table 1 the properties of the final product are specified. The first reactor produced around 70 % by weight (split wt %) of the total amount of the final polyethylene resin produced by both first and second reactors.

Example 2

The process of the invention was carried out with the same setup and the same polymerization catalyst of Example 1. 10 g/h of the solid catalyst component prepared as described above were fed, using 5 kg/h of liquid propane, to a precontacting apparatus, in which also triethylaluminum (TEAL) as well as tetrahydrofuran (THF) were dosed. The weight ratio between aluminum alkyl and solid catalyst component was 6:1. The weight ratio between aluminum alkyl and THF was 20. The precontacting step was carried out under stirring at 50°C with a total residence time of 120 minutes.

The catalyst enters the first gas-phase polymerization reactor 1 of Fig. 1 via line 10. In the first reactor ethylene was polymerized using $H_2$ as molecular weight regulator and in the presence of propane as inert diluent. 60 kg/h of ethylene and 55 g/h of hydrogen were fed to the first reactor via line 9. 1.1 kg/h of Hexene was fed to the first reactor.

The polymerization was carried out at a temperature of 80 °C and at a pressure of 2.9 MPa.

The polymer obtained in the first reactor was discontinuously discharged via line 11, separated from the gas into the gas/solid separator 12, and reintroduced into the second gas-phase reactor via line 14.

The polymer produced in the first reactor had a melt index MIE of about 6.5 g/10 min and a density of 0.952 $kg/dm^3$.

The second reactor was operated under polymerization conditions of about 80 °C, and a pressure of 2.5 MPa. 8 kg/h of ethylene and 0.5 kg/h of 1-hexene were introduced in the downcomer of the second reactor via line 46. 5 kg/h of propane, 17.5 kg/h of ethylene and 180 g/h of hydrogen were fed through line 45 into the recycling system.

In order to keep the molecular weight distribution narrow, the second reactor was operated by establishing similar conditions of monomers and hydrogen concentration within the riser 32 and the downcomer 33. This is achieved by feeding via line 52, 75 kg/h of a liquid stream (liquid barrier) into the upper part of the downcomer 33. Said liquid stream has a composition different from that of the gas mixture present in the riser. Said different concentrations of monomers and hydrogen within the riser, the downcomer of the second reactor and the composition of the liquid barrier are indicated in Table 1. The liquid stream of line 52 comes from the condensation step in the condenser 49, at working conditions of 50°C and 2.5 MPa, wherein a part of the recycle stream is cooled and partially condensed.

As shown in the figure, a separating vessel and a pump are placed, in the order, downstream the condenser 49. The final polymer was discontinuously discharged via line 54.

The first reactor produced around 69 % by weight (split wt %) of the total amount of the final polyethylene resin produced by both first and second reactors.

Comparative Examples 1- 3

The polymers of these comparative examples are prior art polyethylene compositions.

In particular, the polymers of Comparative Examples 1 and 3 are prepared in a slurry polymerization, with a titanium-based Ziegler catalyst.

They are sold by Lyondellbasell with the trademarks Alathon M6580 (homopolymer) and Alathon M5265X01 (copolymer) respectively.

The polymer of Comparative Example 2 is a copolymer prepared in a Philips slurry loop using a Ziegler catalyst. It is sold by Chevron Phillips with the trademark Marlex 9006.

Table 1

|  | Ex. 1 | Ex. 2 | Comp. Ex. 1 | Comp. Ex. 2 | Comp. Ex. 3 |
|---|---|---|---|---|---|
| Operative conditions first reactor |  |  | - | - | - |
| $H_2/C_2H_4$ Molar ratio | 1.1 | 0.8 | - | - | - |
| $C_2H_4\%$ | 16 | 16 | - | - | - |
| $C_6H_{12}\%$ | 0 | 0.5 | - | - | - |
| Split (wt%) | 70 | 69 | - | - | - |
|  |  |  |  |  |  |
| Operative conditions second reactor |  |  |  |  |  |
| $H_2/C_2H_4$ Molar ratio riser | 1.2 | 0.81 | - | - | - |
| $C_2H_4\%$ riser | 12.8 | 12.1 | - | - | - |
| $C_6H_{12}$ riser | 0 | 0.2 | - | - | - |
| $H_2/C_2H_4$ Molar ratio downer | 1.4 | 1.1 | - | - | - |
| $C_2H_4\%$ downer | 4.8 | 5.0 |  |  |  |

(continued)

|  | Ex. 1 | Ex. 2 | Comp. Ex. 1 | Comp. Ex. 2 | Comp. Ex. 3 |
|---|---|---|---|---|---|
| $C_6H_{12}$ downer | 0 | 0.45 |  |  |  |
| $H_2/C_2H_4$ Molar ratio barrier | 0.12 | 0.1 |  |  |  |
| $C_2H_4$% barrier | 5.3 | 4.4 |  |  |  |
| $C_6H_{12}$ barrier | 0 | 2 |  |  |  |
|  |  |  |  |  |  |
| Final Polymer properties |  |  |  |  |  |
| MIE (g/10 min.) | 8.5 | 7 | 8.9 | 6.8 | 6.6 |
| MIF/MIE | 24.7 | 25.3 | 30.1 | 23.4 | 21.1 |
| Density (g/cm³) | 0.966 | 0.952 | 0.965 | 0.952 | 0.952 |
| FNCT @ 50°C, 6 MPa (h) | 2.1 | 3.1 | < 1 | 2.9 | 1.8 |
| Charpy aCN (kJ/m²) | 4.1 | 4.3 | 4.1 | 4.3 | 4.8 |
| ER | 0.46 | 0.48 | 0.95 | 0.55 | 0.54 |

Table 1 shows that, for comparable density values, the polyethylene composition of the invention has an improved FNCT/Charpy balance.

In fact, Example 1 (according to the invention) should be compared with Comparative Example 1, having a close density value, but superior FNCT, the Charpy value being the same.

Example 2 (according to the invention) should be compared with Comparative Examples 2 and 3, having the same density.

In Comparative Example 2 the Charpy value is the same as in Example 2, but with a lower FNCT value.

In Comparative Example 3 the Charpy value is increased, but the FNCT value is sensibly decreased.

Thus it is clear that also in the case of lower density with respect to Example 1, the FNCT/Charpy balance of the inventive polyolefin composition is improved.

For both Example 1 and Example 2 (according to the invention) the improved FNCT/impact balance could be achieved with a lower ER value (i.e. narrower rheological polydispersity) that the comparative examples.

**Claims**

1.  Polyethylene composition having the following features:

    1) density of from 0.950 to 0.970 g/cm³, determined according to ISO 1183 at 23°C;
    2) MIE from 1 to 30 g/10 min.;
    3) ratio MIF/MIE from 15 to 30, in particular from 20 to 29 or from 22 to 29, where MIF is the melt flow index at 190°C with a load of 21.60 kg, and MIE is the melt flow index at 190°C with a load of 2.16 kg, both determined according to ISO 1133;
    4) ER values from 0.40 to 0.52.

2.  The polyethylene composition of claim 1, consisting of or comprising one or more ethylene homopolymers, in particular consisting of or comprising two ethylene homopolymers.

3.  The polyethylene composition of claim 1, consisting of or comprising one or more ethylene copolymers, in particular consisting of or comprising an ethylene homopolymer and an ethylene copolymer or consisting of or comprising two ethylene copolymers.

4.  The polyethylene composition of claim 3, wherein the comonomer or comonomers present in the ethylene copolymers are selected from olefins having formula $CH_2=CHR$ wherein R is an alkyl radical, linear or branched, having from 1 to 10 carbon atoms.

**5.** The polyethylene composition of claim 1, obtainable by using a Ziegler-Natta polymerization catalyst.

**6.** Injection moulded articles comprising the polyethylene composition of claims 1 to 5.

**Patentansprüche**

**1.** Polyethylenzusammensetzung mit den folgenden Merkmalen:

> 1) einer Dichte von 0,950 bis 0,970 g/cm$^3$, bestimmt gemäß ISO 1183 bei 23 °C;
> 2) einem MIE von 1 bis 30 g/10 min.;
> 3) einem Verhältnis von MIF/MIE von 15 bis 30, insbesondere von 20 bis 29 oder 22 bis 29, wobei MIF der Schmelzflussindex bei 190 °C unter einer Last von 21,60 kg ist und MIE der Schmelzflussindex bei 190 °C unter einer Last von 2,16 kg ist, wobei beide gemäß ISO 1133 bestimmt werden;
> 4) ER-Werten von 0,40 bis 0,52.

**2.** Polyethylenzusammensetzung nach Anspruch 1, die aus einem oder mehreren Ethylenhomopolymeren besteht oder diese umfasst, insbesondere aus zwei Ethylenhomopolymeren besteht oder diese umfasst.

**3.** Polyethylenzusammensetzung nach Anspruch 1, die aus einem oder mehreren Ethylencopolymeren besteht oder diese umfasst, insbesondere aus einem Ethylenhomopolymer und einem Ethylencopolymer besteht oder diese umfasst, oder aus zwei Ethylencopolymeren besteht oder diese umfasst.

**4.** Polyethylenzusammensetzung nach Anspruch 3, wobei das Comonomer oder die Comonomere, das/die in den Ethylencopolymeren vorhanden ist/sind, ausgewählt ist/sind aus Olefinen mit der Formel CH$_2$=CHR, wobei R ein linearer oder verzweigter Alkylrest mit 1 bis 10 Kohlenstoffatomen ist.

**5.** Polyethylenzusammensetzung nach Anspruch 1, die unter Verwendung eines Ziegler-Natta-Polymerisationskatalysators erhältlich ist.

**6.** Spritzgegossene Artikel, welche die Polyethylenzusammensetzung der Ansprüche 1 bis 5 umfasst.

**Revendications**

**1.** Composition de polyéthylène présentant les caractéristiques suivantes :

> 1) une densité de 0,950 à 0,970 g/cm$^3$, déterminée selon la norme ISO 1183 à 23°C ;
> 2) un MIE de 1 à 30 g/10 min. ;
> 3) un rapport MIF/MIE de 15 à 30, en particulier de 20 à 29 ou de 22 à 29, où MIF est l'indice de fluidité à chaud à 190°C sous une charge de 21,60 kg et MIE est l'indice de fluidité à chaud à 190°C sous une charge de 2,16 kg, tous deux déterminés selon la norme ISO 1133 ;
> 4) des valeurs ER de 0,40 à 0,52.

**2.** Composition de polyéthylène selon la revendication 1, constituée par ou comprenant un ou plusieurs homopolymères d'éthylène, en particulier constituée par ou comprenant deux homopolymères d'éthylène.

**3.** Composition de polyéthylène selon la revendication 1, constituée par ou comprenant un ou plusieurs copolymères d'éthylène, en particulier constituée par ou comprenant un homopolymère d'éthylène et un copolymère d'éthylène ou constituée par ou comprenant deux copolymères d'éthylène.

**4.** Composition de polyéthylène selon la revendication 3, le ou les comonomères présents dans les copolymères d'éthylène étant choisis parmi les oléfines de formule CH$_2$=CHR, où R représente un radical alkyle, linéaire ou ramifié, comprenant 1 à 10 atomes de carbone.

**5.** Composition de polyéthylène selon la revendication 1, pouvant être obtenue à l'aide d'un catalyseur de polymérisation Ziegler-Natta.

6. Articles moulés par injection comprenant la composition de polyéthylène selon les revendications 1 à 5.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050288443 A
- US 4298718 A
- US 4495338 A
- WO 2004106388 A
- WO 9412568 A
- US 5534472 A

**Non-patent literature cited in the description**

- **D. GELDART.** Gas Fluidisation Technology. J. Wiley & Sons Ltd, 1986, 155
- **M. FLEISSNER.** *Kunststoffe,* 1987, vol. 77, 45
- **R. SHROFF ; H. MAVRIDIS.** New Measures of Polydispersity from Rheological Data on Polymer Melts. *J. Applied Polymer Science,* 1995, vol. 57, 1605